# EUROPEAN PATENT APPLICATION

(11) **EP 4 166 801 A1**
(43) Date of publication of application: **19.04.2023**
(21) Application number: 21826713.6
(22) Date of filing: 10.06.2021
(51) Int. Cl.: F16C 17/03, F16C 27/00, F01D 25/16, F16F 15/023, F04D 29/056, F04D 29/057

(54) **TILTING PAD BEARING**

(30) Priority: 15.06.2020 JP 2020102876
(71) Applicant: KAWASAKI JUKOGYO KABUSHIKI KAISHA, Kobe-shi, Hyogo 650-8670 (JP)
(72) Inventor: TAKEUCHI, Ryota, Hyogo 650-8670 (JP); INOUE, Takahiko, Hyogo 650-8670 (JP); ISHIMARU, Hidetsugu, Hyogo 650-8670 (JP)
(74) Representative: Dehns
(86) International application number: PCT/JP2021/022114
(87) International publication number: WO 2021/256371

(57) **Abstract**

A tilting pad bearing includes: a bearing housing that is cylindrical, the bearing housing including an inner ring and an outer ring that are concentrically located, arc springs located side by side in a circumferential direction between the inner ring and the outer ring, and slits that separate the inner ring, the outer ring, and the arc springs from each other; bearing pads that are, on an inner peripheral side of the bearing housing, located side by side in the circumferential direction; and an oil feeder that feeds lubricating oil into gaps between the bearing pads, the gaps extending in the circumferential direction, and into the slits. The bearing housing includes divisional cylindrical bodies that are located side by side in the circumferential direction and that are coupled together. Each of the divisional cylindrical bodies includes two divisional surfaces that are coupled to another one of the divisional cylindrical bodies. The two divisional surfaces are located in a manner to avoid the arc springs.

## Description

### Technical Field

The present disclosure relates to the structure of a tilting pad bearing that is, in various rotating machines such as a jet engine, a turbo compressor, and a turbocharger, located between a rotating shaft and a support, the tilting pad bearing supporting the rotating shaft such that the rotating shaft is rotatable.

### Background Art

Conventionally, tilting pad bearings have been used in rotating machines that operate at high speed. A tilting pad bearing includes: bearing pads that are, on the outer periphery of a rotating shaft, located side by side in a circumferential direction; a bearing housing that supports the bearing pads; and an oil feeder that feeds lubricating oil to each of the bearing pads. Oil feeding techniques adoptable by the oil feeder include an oil bath technique and a direct lubrication technique. In the oil bath technique, the entire space in which the bearing pads are located is filled with the lubricating oil. In the direct lubrication technique, an oil feeding nozzle directly feeds the lubricating oil to a gap between the rotating shaft and the bearing pads. The lubricating oil that fills the gap between the rotating shaft and the bearing pads forms a lubricating oil film, and the pressure of the lubricating oil film supports the rotating shaft.

Patent Literatures 1 to 3 each disclose this type of tilting pad bearing.

Patent Literature 1 discloses: tilting pads located around a rotating shaft; and a damper located around the tilting pads. The damper includes: a cylindrical inner structure including an inner cylindrical surface that engages with the tilting pads; a cylindrical outer casing including an inner cylindrical surface that faces the outer cylindrical surface of the inner structure; and flexible ligaments that connect the inner structure to the outer casing. A space in which the tilting pads are located, and a gap between the outer cylindrical surface of the inner structure and the inner cylindrical surface of the outer casing, are filled with a fluid.

Patent Literature 2 discloses a radial bearing device. The radial bearing device includes: a carrier ring that surrounds a rotating shaft via a cylindrical space; bearing pads located in the cylindrical space; and a lubricating oil feeder that feeds lubricating oil to the cylindrical space. The carrier ring includes two half-cylindrical components that are coupled together. The bearing pads include damper bearing pads and tilting bearing pads. The damper bearing pads are located in the upper half of the cylindrical space, and the tilting bearing pads are located in the lower half of the cylindrical space. There is a damper gap between the carrier ring and the damper bearing pads, and the lubricating oil that fills the damper gap serves as a squeeze film damper.

Patent Literature 3 discloses a damper element of a bearing. The damper element includes: a hollow cylindrical inner ring that supports the bearing; a hollow cylindrical outer ring; and three or more middle arc portions located side by side in a circumferential direction at regular intervals between the inner ring and the outer ring, the middle arc portions being separated from each other by slits. One end of each middle arc portion in the circumferential direction is integrally coupled to the outer ring, and the other end of each middle arc portion in the circumferential direction is integrally coupled to the inner ring.

### Citation List

### Patent Literature

PTL 1: U.S. Patent No. US8834027
PTL 2: Japanese Laid-Open Patent Application Publication No. 2017-172697
PTL 3: Japanese Laid-Open Patent Application Publication No. 2007-56976

### Summary of Invention

### Technical Problem

In the damper of Patent Literature 1, the inner structure, the outer casing, and the ligaments are components independent of each other. Accordingly, the damper of Patent Literature 1 has the following problems: the structure of the damper is complex; the damper requires a space in a radial direction; and positional and dimensional precisions of the outer surface of the inner structure and the outer surface of the outer casing are difficult to achieve. In the damper element of Patent Literature 3, the inner ring, the middle arc portions, and the outer ring are integrated together. However, unlike the carrier ring of Patent Literature 2, the damper element of Patent Literature 3 does not have a divided structure. For this reason, in the case of the damper element of Patent Literature 3, the work of assembling the bearing to a rotating machine is complicated and troublesome.

The present disclosure has been made in view of the above, and an object of the present disclosure is to propose a tilting pad bearing having a damper function and a centering function, the tilting pad bearing including a bearing housing that is configurable to have a divided structure.

### Solution to Problem

A tilting pad bearing according to one aspect of the present disclosure includes: a bearing housing that is cylindrical, the bearing housing including an inner ring and an outer ring that are concentrically located, arc springs located side by side in a circumferential direction between the inner ring and the outer ring, and slits that separate the inner ring, the outer ring, and the arc springs from each other; bearing pads that are, on an inner peripheral side of the bearing housing, located side by side in the circumferential direction; and an oil feeder that feeds lubricating oil into gaps between the bearing pads, the gaps extending in the circumferential direction, and into the slits. The bearing housing includes divisional cylindrical bodies that are located side by side in the circumferential direction and that are coupled together. Each of the divisional cylindrical bodies includes two divisional surfaces that are coupled to another one of the divisional cylindrical bodies. The two divisional surfaces are located in a manner to avoid the arc springs.

According to the tilting pad bearing configured as above, the lubricating oil that fills the slits exerts a damper function, and the arc springs exert a function of centering the rotating shaft. Even though the bearing housing has a divided structure, since the arc springs are not divided at the divisional surfaces of the bearing housing, the arc springs are not hindered from exerting their function. Since the bearing housing has the divided structure, the work of assembling the tilting pad bearing to the rotating shaft (of a rotating machine) can be readily performed.

### Advantageous Effects of Invention

The present disclosure makes it possible to propose a tilting pad bearing having a damper function and a centering function, the tilting pad bearing including a bearing housing that is configurable to have a divided structure.

### Brief Description of Drawings

FIG. 1 shows a tilting pad bearing according to one embodiment as seen in a direction in which a center axis of the tilting pad bearing extends.
FIG. 2 is a sectional view taken along line II-II of FIG. 1 as viewed in the direction of arrows of line II-II.
FIG. 3 is a sectional view taken along line III-III of FIG. 1 as viewed in the direction of arrows of line III-III.
FIG. 4 is a sectional view of a part of the tilting pad bearing, the sectional view showing a support configuration for an oil feeding nozzle.
FIG. 5 is a sectional view of a part of the tilting pad bearing, the sectional view showing a variation of the support configuration for the oil feeding nozzle.
FIG. 6 is a sectional view of a part of the tilting pad bearing, the sectional view showing Variation 1 of end plates.
FIG. 7 is a sectional view of a part of the tilting pad bearing, the sectional view showing Variation 2 of the end plates.

### Description of Embodiments

Next, an embodiment of the present disclosure is described with reference to the drawings. In each drawing, common components (parts, portions) among the drawings are denoted by the same reference signs, and repeating the same descriptions is avoided below.

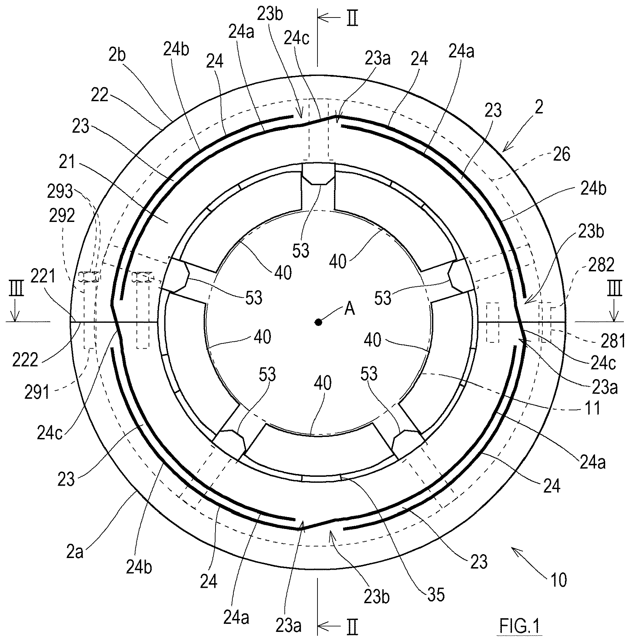

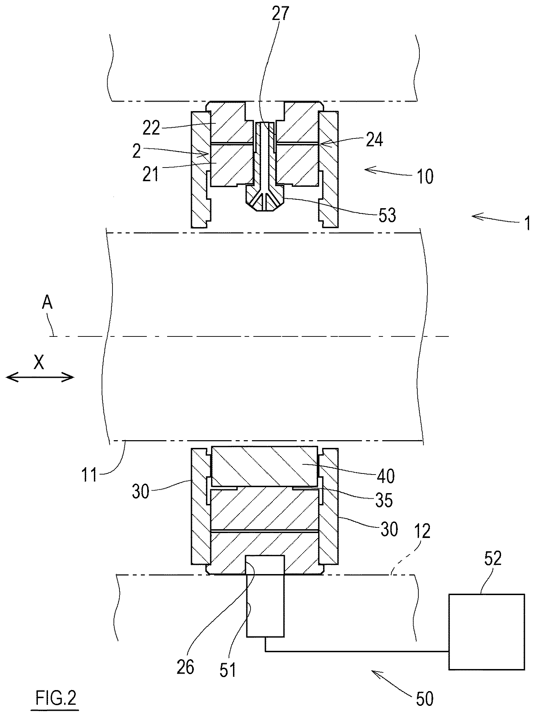

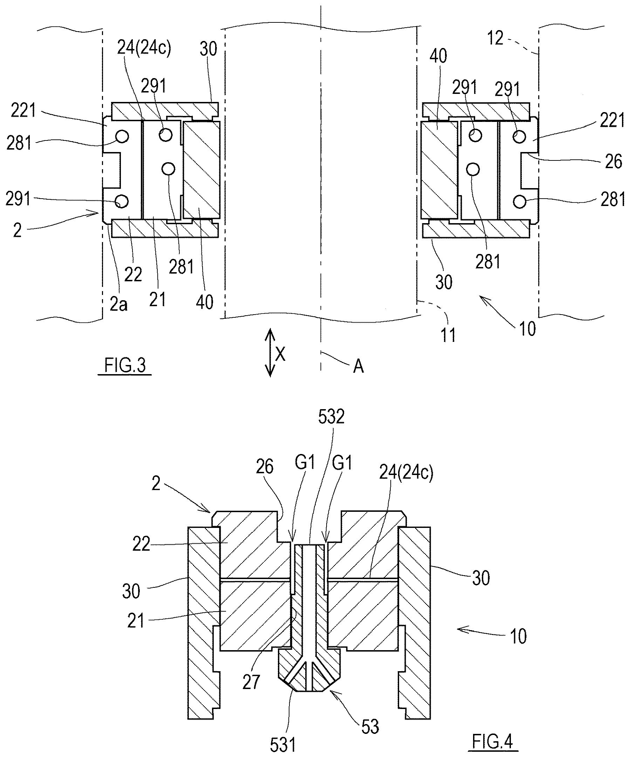

FIG. 1 shows a tilting pad bearing according to one embodiment (hereinafter, simply referred to as "bearing 10") as seen in a direction in which a center axis A of the bearing 10 extends. In FIG. 1, a rotating shaft 11 is indicated by two-dot chain line, and end plates 30 are seen through. FIG. 2 is a sectional view taken along line II-II of FIG. 1 as viewed in the direction of arrows of line II-II, and FIG. 3 is a sectional view taken along line III-III of FIG. 1 as viewed in the direction of arrows of line III-III.

As shown in FIG. 1 and FIG. 2, a rotating machine 1, to which the bearing 10 according to the present embodiment is applied, includes: the rotating shaft 11; a housing 12 serving as a support for the rotating shaft 11; and the bearing 10. The rotating shaft 11 is rotatably supported on the housing 12 by the bearing 10, which is located between the rotating shaft 11 and the housing 12. The rotating machine 1 may be, for example, any of various rotating machines, such as a jet engine, a turbo compressor, or a turbocharger.

The bearing 10 shown in FIGS. 1 to 3 includes: a bearing housing 2, which is hollow and cylindrical; bearing pads 40, which are, on the inner peripheral side of the bearing housing 2, located side by side in a circumferential direction; and an oil feeder 50. Hereinafter, for the sake of convenience of the description, the direction in which the center axis A of the bearing 10 extends is referred to as "the axial direction X"; the radial direction of a circle whose center is the center axis A is referred to as "the radial direction"; and the circumferential direction of the circle whose center is the center axis A is referred to as "the circumferential direction".

In the present embodiment, each bearing pad 40 is arc-shaped, and five bearing pads 40 are located side by side in the circumferential direction around the rotating shaft 11. However, the number of bearing pads 40 is not limited to the present embodiment. The inner surface of each bearing pad 40 in the radial direction faces the peripheral surface of the rotating shaft 11, with an oil film present between the inner surface of each bearing pad 40 and the peripheral surface of the rotating shaft 11.

The bearing housing 2 has a function of centering the rotating shaft 11 as well as a function of damping the vibration of the rotating shaft 11 (i.e., a damper function). The outer surface of the bearing housing 2 in the radial direction is in close contact with and fixed to a cylindrical support of the housing 12. Pivots 35 are located on the inner surface of the bearing housing 2 in the radial direction. The pivots 35 are in contact with the outer surfaces of the respective bearing pads 40 in the radial direction.

The bearing housing 2 integrally includes an inner ring 21, an outer ring 22, and four arc springs 23. Each of the inner ring 21 and the outer ring 22 has a hollow cylindrical shape. The outer ring 22 and the inner ring 21, whose centers coincide with the center axis A, are concentrically located such that the outer periphery of the inner ring 21 and the inner periphery of the outer ring 22 are spaced apart from each other in the radial direction. The four arc springs 23 are located between the inner ring 21 and the outer ring 22, which are spaced apart from each other in the radial direction.

The four arc springs 23 are located side by side in the circumferential direction at substantially regular intervals. Each arc spring 23 is an arc-shaped component. The inner surface of the arc spring 23 in the radial direction, and the outer surface of the arc spring 23 in the radial direction, are each an arc surface whose center is the center axis A. The inner ring 21 and the arc springs 23 are separated from each other in the radial direction, and the outer ring 22 and the arc springs 23 are separated from each other in the radial direction, by four slits 24, each of which penetrates the bearing housing 2 in the axial direction X. The inner surfaces of the arc springs 23 face the outer surface of the inner ring 21, with the slits 24 located between the outer surface of the inner ring 21 and the inner surfaces of the arc springs 23. The outer surfaces of the arc springs 23 face the inner surface of the outer ring 22, with the slits 24 located between the inner surface of the outer ring 22 and the outer surfaces of the arc springs 23. The width of each slit 24 is set such that the width of the slit 24 does not become 0, i.e., such that the inner ring 21, the outer ring 22, and the arc springs 23 do not come into contact with each other, when axial vibration of the rotating shaft 11 occurs.

A first end of each arc spring 23, the first end being one end of the arc spring 23 in the circumferential direction, is connected to the inner ring 21 by a first bridging portion 23a. A second end of each arc spring 23, the second end being the other end of the arc spring 23 in the circumferential direction, is connected to the outer ring 22 by a second bridging portion 23b. Thus, the inner ring 21, the outer ring 22, and the arc springs 23 are, as a whole, a single component although the arc springs 23 are separated from the inner ring 21 and the outer ring 22 in the radial direction by the slits 24.

Each slit 24 includes an inner slit portion 24a, a connecting portion 24c, and an outer slit portion 24b. These portions are continuous in this order. The inner slit portion 24a is an arc-shaped portion extending in the circumferential direction. The outer slit portion 24b is an arc-shaped portion extending in the circumferential direction at a position radially outward of the inner slit portion 24a. In a case where, among the arc springs 23, those that are adjacent to each other in the circumferential direction are referred to as a "first arc spring" and a "second arc spring", the inner slit portion 24a of one slit 24 separates the first arc spring and the inner ring 21 from each other, and the outer slit portion 24b of the one slit 24 separates the second arc spring and the outer ring 22 from each other. As thus described, the inner slit portion 24a and the outer slit portion 24b of each slit 24 are shifted from each other in the circumferential direction, and also shifted from each other in the radial direction. The connecting portion 24c connects between the inner slit portion 24a and the outer slit portion 24b in the circumferential direction. The direction in which the connecting portion 24c extends includes a radial direction component and a circumferential direction component.

The bearing housing 2 includes divisional cylindrical bodies 2a and 2b, which are located side by side in the circumferential direction and which are coupled together. In the present embodiment, the bearing housing 2 is divided into two halves, specifically, divided into a lower divisional cylindrical body 2a, which is a lower cylindrical half, and an upper divisional cylindrical body 2b, which is an upper cylindrical half.

Each of the divisional cylindrical bodies 2a and 2b includes divisional surfaces 221 or 222 at both ends thereof in the circumferential direction. In the present embodiment, the lower divisional cylindrical body 2a includes two upper divisional surfaces 221, and the upper divisional cylindrical body 2b includes two lower divisional surfaces 222. The divisional surfaces 221 of the lower divisional cylindrical body 2a are coupled to the divisional surfaces 222 of the upper divisional cylindrical body 2b.

At the divisional surfaces 221 of the lower divisional cylindrical body 2a, on each of the inner ring 21 and the outer ring 22, there are at least one first bolt hole (or at least one bolt hole) 291 and at least one pin 281. The pins 281 may be configured by fitting dowels in respective dowel holes on the divisional surfaces 221. At the divisional surfaces 222 of the upper divisional cylindrical body 2b, on each of the inner ring 21 and the outer ring 22, there are at least one second bolt hole 292 corresponding to the first bolt hole 291 and at least one pin hole 282 corresponding to the pin 281.

The first bolt hole 291 of the inner ring 21 of the lower divisional cylindrical body 2a and the second bolt hole 292 of the inner ring 21 of the upper divisional cylindrical body 2b are brought into communication with each other, and a bolt 293 is screwed therein. In this manner, the inner ring 21 of the lower divisional cylindrical body 2a and the inner ring 21 of the upper divisional cylindrical body 2b are fastened together. Similarly, the first bolt hole 291 of the outer ring 22 of the lower divisional cylindrical body 2a and the second bolt hole 292 of the outer ring 22 of the upper divisional cylindrical body 2b are brought into communication with each other, and a bolt 293 is screwed therein. In this manner, the outer ring 22 of the lower divisional cylindrical body 2a and the outer ring 22 of the upper divisional cylindrical body 2b are fastened together. Further, the pin 281 on the inner ring 21 of the lower divisional cylindrical body 2a is received in the pin hole 282 of the inner ring 21 of the upper divisional cylindrical body 2b. In this manner, positioning of the inner ring 21 of the lower divisional cylindrical body 2a and the inner ring 21 of the upper divisional cylindrical body 2b relative to each other is performed, and a positional shift therebetween is suppressed. Similarly, the pin 281 on the outer ring 22 of the lower divisional cylindrical body 2a is received in the pin hole 282 of the outer ring 22 of the upper divisional cylindrical body 2b. In this manner, positioning of the outer ring 22 of the lower divisional cylindrical body 2a and the outer ring 22 of the upper divisional cylindrical body 2b relative to each other is performed, and a positional shift therebetween is suppressed.

The arrangement of the bolt holes 291, the bolt holes 292, the pins 281, and the pin holes 282 is not limited to the above-described example, but may be any arrangement, so long as the combination of the bolt hole 291 and the second bolt hole 292 and the combination of the pin 281 and the pin hole 282 are applied to each of the inner ring 21 and the outer ring 22 at the divisional surfaces 221 and 222, which are coupled together. For example, at the divisional surfaces 222 of the upper divisional cylindrical body 2b, on each of the inner ring 21 and the outer ring 22, there may be at least one first bolt hole (or at least one bolt hole) 291, and at the divisional surfaces 221 of the upper divisional cylindrical body 2b, on each of the inner ring 21 and the outer ring 22, there may be the second bolt hole 292 corresponding to the first bolt hole 291. Similarly, at the divisional surfaces 222 of the upper divisional cylindrical body 2b, on each of the inner ring 21 and the outer ring 22, there may be at least one pin 281, and at the divisional surfaces 221 of the upper divisional cylindrical body 2b, on each of the inner ring 21 and the outer ring 22, there may be the pin hole 282 corresponding to the pin 281.

The divisional surfaces 221 and 222 of the bearing housing 2 are located in a manner to avoid the arc springs 23. In other words, the arc springs 23 are not divided by the divisional surfaces 221 and 222.

For example, at each of the divisional surfaces 221 and 222 of the bearing housing 2, none of the arc springs 23 is exposed, but, at least, one of the first bridging portions 23a or one of the second bridging portions 23b is exposed. Thus, the divisional surfaces 221 and 222 of the bearing housing 2 are located in a manner to avoid the arc springs 23.

For example, at each of the divisional surfaces 221 and 222 of the bearing housing 2, neither the inner slit portion 24a nor the outer slit portion 24b is exposed, but only the connecting portion 24c is exposed. Thus, the divisional surfaces 221 and 222 of the bearing housing 2 are located in a manner to avoid the arc springs 23.

There is an oil feeding groove 26 on the outer surface of the bearing housing 2.

The oil feeding groove 26 continuously extends in the circumferential direction. The housing 12 includes a lubricating oil passage 51. The oil feeding groove 26 communicates with the lubricating oil passage 51. The oil feeding groove 26 is filled with lubricating oil that is fed from a lubricating oil source 52 through the lubricating oil passage 51.

FIG. 4 is a sectional view of a part of the bearing 10, the sectional view showing a support configuration for an oil feeding nozzle 53. As shown in FIG. 4, the bearing housing 2 includes a nozzle hole 27, whose center is the center axis A and which radially penetrates the bearing housing 2. An outer opening of the nozzle hole 27 in the radial direction is positioned in the oil feeding groove 26. The present embodiment includes five of such nozzle holes 27, which are located at regular intervals in the circumferential direction (see FIG. 1). The oil feeding nozzle 53 is fitted in and fixed to each nozzle hole 27. The oil feeding nozzle 53 integrally includes a shaft 532 and a head 531. The shaft 532 is received in and supported by the nozzle hole 27 of the bearing housing 2. The head 531 protrudes inward of the bearing housing 2 in the radial direction. The head 531 is positioned between bearing pads 40 that are adjacent to each other in the circumferential direction. The oil feeding nozzle 53 includes therein the following: an inlet that is open in the oil feeding groove 26; and an oil passage that communicates with at least one outlet that is open between the bearing pads 40 that are adjacent to each other.

The shaft 532 of the oil feeding nozzle 53 is spaced apart, by a minute gap, from one of the inner and outer rings 21 and 22 of the bearing housing 2, and is coupled to the other one of the inner and outer rings 21 and 22 of the bearing housing 2.

In the example shown in FIG. 4, the outer surface of the shaft 532 of the oil feeding nozzle 53 is in contact with the inner surface of the nozzle hole 27 in the inner ring 21 of the bearing housing 2, and the shaft 532 is coupled to the inner ring 21 by an unshown fastener. The outer surface of the shaft 532 of the oil feeding nozzle 53 is spaced apart, by a gap G1, from the inner surface of the nozzle hole 27 in the outer ring 22 of the bearing housing 2.

The oil feeding groove 26 and the slit 24 communicate with each other through the gap G1 between the outer ring 22 of the bearing housing 2 and the oil feeding nozzle 53. The lubricating oil is fed from the oil feeding groove 26 to the slit 24 through the gap G1. When the rotating shaft 11 vibrates due to its rotation, pressure derived from viscosity occurs in a fluid film that is formed by the lubricating oil in the slit 24. Accordingly, vibration damping (so-called squeeze damping) occurs. Desirably, the size of the gap G1 is less than or equal to the width of the slit 24 so that the lubricating oil will not escape from the slit 24 due to pressure that is caused by axial vibration of the rotating shaft 11.

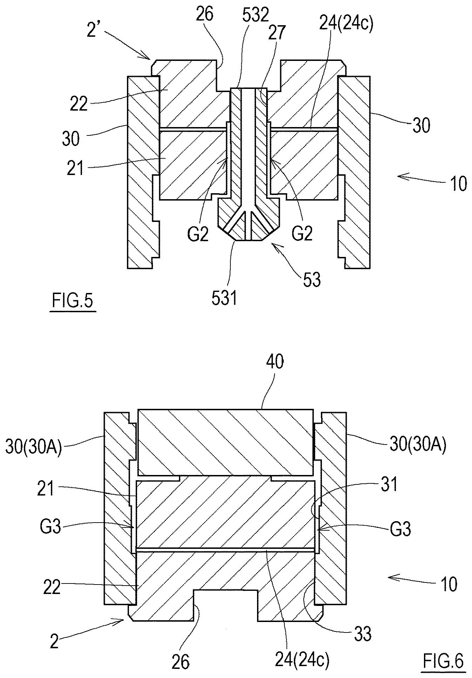

FIG. 5 is a sectional view of a part of the bearing 10, the sectional view showing a variation of the support configuration for the oil feeding nozzle 53. As illustratively shown in FIG. 5, the outer surface of the shaft 532 of the oil feeding nozzle 53 may be in contact with the inner surface of the nozzle hole 27 in the outer ring 22 of a bearing housing 2', and the shaft 532 may be coupled to the outer ring 22 by an unshown fastener. In this case, the outer surface of the shaft 532 of the oil feeding nozzle 53 is spaced apart, by a gap G2, from the inner surface of the nozzle hole 27 in the inner ring 21 of the bearing housing 2'. The space located inward of the inner ring 21 in the radial direction is filled with the lubricating oil that is injected from the oil feeding nozzle 53, and the space and the slit 24 communicate with each other through the gap G2. Also in this case, desirably, the size of the gap G2 is less than or equal to the width of the slit 24 so that the lubricating oil will not escape from the slit 24 due to pressure that is caused by axial vibration of the rotating shaft 11.

Returning to FIG. 2 and FIG. 3, the end plates 30 are located on both sides of the bearing housing 2 in the axial direction X, respectively, and are supported by the bearing housing 2. Each end plate 30 is hollow disc-shaped. The end plates 30 are in contact with and fixed to one of the inner and outer rings 21 and 22 of the bearing housing 2, but are spaced apart, by minute gaps, from the other one of the inner and outer rings 21 and 22. The end plates 30 may be fixed to the bearing housing 2 by unshown fasteners. Consequently, motion of the outer ring 22 and the inner ring 21 relative to each other, the motion occurring when the rotating shaft 11 vibrates, is not hindered by the end plates 30.

The end plates 30 seal up open ends of the slits 24, the open ends being open in the end surfaces of the bearing housing 2 in the axial direction X. However, between the end plates 30 and the end surfaces of the bearing housing 2 in the axial direction X, there may be end seal gaps G3, which communicate with the open ends of the slits 24.

FIG. 6 is a sectional view of a part of the bearing 10, the sectional view showing Variation 1 of the end plates 30. As shown in FIG. 6, the end plates 30 (30A) according to Variation 1 include sealing surfaces 31. The sealing surfaces 31 face the open ends of the slits 24 in the axial direction X, with minute gaps (end seal gaps G3) present between the sealing surfaces 31 and the open ends of the slits 24. Each slit 24 of the bearing housing 2 communicates with the end seal gaps G3, and the end seal gaps G3 are filled with the lubricating oil.

The end plates 30 (30A) according to Variation 1 include coupling surfaces 33, which are located outward of the sealing surfaces 31 in the radial direction. The coupling surfaces 33 and the outer ring 22 of the bearing housing 2 are joined together. Portions of the end plates 30A, the portions facing the inner ring 21, the arc springs 23, and the slits 24, serve as the sealing surfaces 31. The sealing surfaces 31 are recessed, relative to the coupling surfaces 33, away from the bearing housing 2 in the axial direction X, thereby achieving the formation of the end seal gaps G3. Alternatively, the sealing surfaces 31 and the coupling surfaces 33 may be on the same plane. In this case, the end surfaces of the bearing housing 2 in the axial direction X may be recessed, or a gap filler may be located between the bearing housing 2 and each coupling surface 33, thereby achieving the formation of the end seal gaps G3.

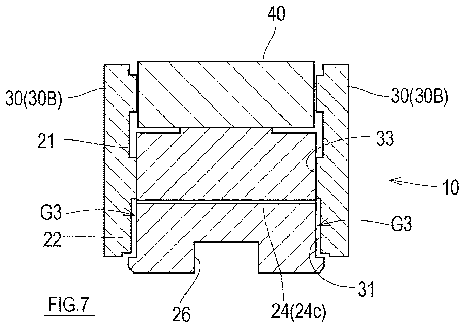

FIG. 7 is a sectional view of a part of the bearing 10, the sectional view showing Variation 2 of the end plates 30. As shown in FIG. 7, the end plates 30 (30B) according to Variation 2 include the coupling surfaces 33, which are located inward of the sealing surfaces 31 in the radial direction. The coupling surfaces 33 and the inner ring 21 of the bearing housing 2 are joined together. Portions of the end plates 30B, the portions facing the outer ring 22, the arc springs 23, and the slits 24, serve as the sealing surfaces 31. The sealing surfaces 31 are recessed, relative to the coupling surfaces 33, away from the bearing housing 2 in the axial direction X, thereby achieving the formation of the end seal gaps G3. Alternatively, the sealing surfaces 31 and the coupling surfaces 33 may be on the same plane. In this case, the end surfaces of the bearing housing 2 in the axial direction X may be recessed, or a gap filler may be located between the bearing housing 2 and each coupling surface 33, thereby achieving the formation of the end seal gaps G3.

As described above, the bearing 10 according to the present embodiment includes: the bearing housing 2, which is cylindrical; the bearing pads 40, which are, on the inner peripheral side of the bearing housing 2, located side by side in the circumferential direction; and the oil feeder 50, which feeds the lubricating oil into the gaps between the bearing pads 40, the gaps extending in the circumferential direction, and into the slits 24 in the bearing housing 2. The bearing housing 2 includes: the inner ring 21 and the outer ring 22, which are concentrically located; the arc springs 23 located side by side in the circumferential direction between the inner ring 21 and the outer ring 22; and the slits 24, which separate the inner ring 21, the outer ring 22, and the arc springs 23 from each other. The bearing housing 2 includes the divisional cylindrical bodies 2a and 2b, which are located side by side in the circumferential direction and which are coupled together. Each of the divisional cylindrical bodies 2a and 2b includes the two divisional surfaces 221 or 222, which are coupled to the other one of the divisional cylindrical bodies 2a and 2b. The two divisional surfaces 221 or 222 of each of the divisional cylindrical bodies 2a and 2b are located in a manner to avoid the arc springs 23.

According to the bearing 10 configured as above, the lubricating oil that fills the slits 24 exerts a damper function, i.e., a function of damping the vibration of the rotating shaft 11, and the arc springs 23 exert a function of centering the rotating shaft 11. Even though the bearing housing 2 has a divided structure, since the arc springs 23 are not divided at the divisional surfaces 221 and 222 of the bearing housing 2, the arc springs 23 are not hindered from exerting their function. Since the bearing housing 2 has the divided structure, the work of assembling the bearing 10 to the rotating machine 1 including the rotating shaft 11 can be readily performed.

In the bearing 10 according to the present embodiment, the arc springs 23 include a first arc spring and a second arc spring that are located side by side in the circumferential direction. Each of the slits 24 includes: the inner slit portion 24a, which separates the first arc spring and the inner ring 21 from each other; the outer slit portion 24b, which separates the second arc spring and the outer ring 22 from each other; and the connecting portion 24c, which connects the inner slit portion 24a and the outer slit portion 24b. At each of the two divisional surfaces 221 of the divisional cylindrical body 2a and at each of the two divisional surfaces 222 of the divisional cylindrical body 2b, neither the inner slit portion 24a nor the outer slit portion 24b is exposed, but the connecting portion 24c is exposed.

Since the bearing housing 2 includes the slits 24 in the above-described manner, and the positions of the two divisional surfaces 221 or 222 of each of the divisional cylindrical bodies 2a and 2b are designed in the above-described manner, the divisional surfaces 221 and 222 can be located in a manner to avoid the arc springs 23.

In the bearing 10 according to the present embodiment, each arc spring 23 includes a first end and a second end, the first end being one end of the arc spring 23 in the circumferential direction, the second end being the other end of the arc spring 23 in the circumferential direction. The bearing housing 2 includes the first bridging portions 23a and the second bridging portions 23b, the first bridging portions 23a connecting the inner ring 21 to the respective first ends, the second bridging portions 23b connecting the outer ring 22 to the respective second ends. At each of the two divisional surfaces 221 of the divisional cylindrical body 2a and at each of the two divisional surfaces 222 of the divisional cylindrical body 2b, none of the arc springs 23 is exposed, but, at least, one of the first bridging portions 23 a or one of the second bridging portions 23b is exposed.

Since the bearing housing 2 includes the arc springs 23 in the above-described manner, and the positions of the two divisional surfaces 221 or 222 of each of the divisional cylindrical bodies 2a and 2b are designed in the above-described manner, the divisional surfaces 221 and 222 can be located in a manner to avoid the arc springs 23.

In the bearing 10 according to the present embodiment, the divisional cylindrical bodies 2a and 2b include a first divisional cylindrical body (the lower divisional cylindrical body 2a) and a second divisional cylindrical body (the upper divisional cylindrical body 2b) that are adjacent to each other in the circumferential direction. The first divisional cylindrical body includes first divisional surfaces 221, and the second divisional cylindrical body includes second divisional surfaces 222 coupled to the first divisional surfaces 221. At the first divisional surfaces 221, on each of the inner ring 21 and the outer ring 22, there are the first bolt hole 291 and the pin hole 282. At the second divisional surfaces 222, on each of the inner ring 21 and the outer ring 22, there are the second bolt hole 292 and the pin hole 282, the second bolt hole 292 communicating with the first bolt hole 291, the pin hole 282 receiving the pin 281 therein.

Thus, at the divisional surfaces 221 and 222, for each of the inner ring 21 and the outer ring 22, positioning using the pin 281 and the pin hole 282, and fastening (coupling) using the first bolt hole 291 and the second bolt hole 292, are performed. Consequently, during assembling and during axial vibration, a positional shift between the divisional surfaces 221 and 222 is prevented, and the shape of the slits 24, which exert the damper function, is maintained.

In the bearing 10 according to the present embodiment, the oil feeder 50 includes at least one oil feeding nozzle 53, which is received in the bearing housing 2 in the radial direction and which directly feeds the lubricating oil into a gap between the bearing pads 40, the gap extending in the circumferential direction. The oil feeding nozzle 53 is spaced apart, by a minute gap G1/G2, from one of the inner and outer rings 21 and 22, and is coupled to the other one of the inner and outer rings 21 and 22.

Since the oil feeding nozzle 53 is supported by the bearing housing 2 in the above-described manner, motion of the outer ring 22 and the inner ring 21 relative to each other, the motion occurring when the rotating shaft 11 vibrates, is not hindered by the oil feeding nozzle 53.

As in the above-described embodiment, the bearing 10 may further include the end plates 30A or 30B, the end plates being located on both sides of the bearing housing 2 in the axial direction X, respectively, the end plates including the sealing surfaces 31, which face the open ends of the slits 24 in the axial direction X, with the gaps G3 present between the sealing surfaces 31 and the open ends of the slits 24. The end plates 30A or 30B are spaced apart from one of the inner and outer rings 21 and 22, and coupled to the other one of the inner and outer rings 21 and 22.

Since the end plates 30A or 30B are supported by the bearing housing 2 in the above-described manner, the end seal gaps G3 between the end plates 30A or 30B and the end surfaces of the bearing housing 2 in the axial direction X have a stable size. When the rotating shaft 11 vibrates due to its rotation, viscous resistance occurs in a fluid film formed by the lubricating oil that fills each of the end seal gaps G3. This makes it possible to cause vibration damping by energy dissipation (so-called dashpot damping). Accordingly, by adjusting the size of the end seal gaps G3, the damper performance of the bearing 10 can be adjusted.

Although the preferred embodiment (and its variations) is as described above, specific structural and/or functional details of the above-described embodiment can be modified without departing from the scope of the present disclosure, and such modifications would fall within the scope of the present disclosure. The above-described configurations can be modified, for example, as described below.

For example, in the bearing 10 according to the above-described embodiment, the number of arc springs 23 in the bearing housing 2 is four, and also, the number of slits 24 in the bearing housing 2 is four. However, the number of arc springs 23 and the number of slits 24 are not limited to four, but both of them may be two or more.

For example, in the bearing 10 according to the above-described embodiment, the bearing housing 2 is divided into two halves, i.e., upper and lower halves. Alternatively, the bearing housing 2 may be divided into left and right halves. The bearing housing 2 need not be divided into two, but may be divided into any number of portions, so long as the bearing housing 2 is divided into two or more portions.

### Reference Signs List

2: bearing housing
2a, 2b: divisional cylindrical body
10: bearing
11: rotating shaft
12: housing
21: inner ring
22: outer ring
23: arc spring
23a, 23b: bridging portion
24: slit
24a: inner slit portion
24b: outer slit portion
24c: connecting portion
30, 30A, 30B: end plate
31: sealing surface
33: coupling surface
40: bearing pad
50: oil feeder
53: oil feeding nozzle
221, 222: divisional surface
281: pin
282: pin hole
291, 292: first bolt hole
293: bolt

## Claims

1. A tilting pad bearing comprising:
a bearing housing that is cylindrical, the bearing housing including
an inner ring and an outer ring that are concentrically located,
arc springs located side by side in a circumferential direction between the inner ring and the outer ring, and
slits that separate the inner ring, the outer ring, and the arc springs from each other;
bearing pads that are, on an inner peripheral side of the bearing housing, located side by side in the circumferential direction; and
an oil feeder that feeds lubricating oil into gaps between the bearing pads, the gaps extending in the circumferential direction, and into the slits, wherein
the bearing housing includes divisional cylindrical bodies that are located side by side in the circumferential direction and that are coupled together,
each of the divisional cylindrical bodies includes two divisional surfaces that are coupled to another one of the divisional cylindrical bodies, and
the two divisional surfaces are located in a manner to avoid the arc springs.

2. The tilting pad bearing according to claim 1, wherein
the arc springs include a first arc spring and a second arc spring that are located side by side in the circumferential direction,
each of the slits includes:
an inner slit portion that separates the first arc spring and the inner ring from each other;
an outer slit portion that separates the second arc spring and the outer ring from each other; and
a connecting portion that connects the inner slit portion and the outer slit portion, and
at each of the two divisional surfaces, neither the inner slit portion nor the outer slit portion is exposed, but the connecting portion is exposed.

3. The tilting pad bearing according to claim 1, wherein
each arc spring includes a first end and a second end, the first end being one end of the arc spring in the circumferential direction, the second end being the other end of the arc spring in the circumferential direction,
the bearing housing includes first bridging portions and second bridging portions, the first bridging portions connecting the inner ring to the respective first ends, the second bridging portions connecting the outer ring to the respective second ends, and
at each of the two divisional surfaces, none of the arc springs is exposed, but, at least, one of the first bridging portions or one of the second bridging portions is exposed.

4. The tilting pad bearing according to any one of claims 1 to 3, wherein
the divisional cylindrical bodies include a first divisional cylindrical body and a second divisional cylindrical body that are adjacent to each other in the circumferential direction,
the first divisional cylindrical body includes first divisional surfaces, and the second divisional cylindrical body includes second divisional surfaces coupled to the first divisional surfaces,
at the first divisional surfaces, on each of the inner ring and the outer ring, there are a first bolt hole and a pin, and
at the second divisional surfaces, on each of the inner ring and the outer ring, there are a second bolt hole and a pin hole, the second bolt hole communicating with the first bolt hole, the pin hole receiving the pin therein.

5. The tilting pad bearing according to any one of claims 1 to 4, wherein
the oil feeder includes at least one oil feeding nozzle that is received in the bearing housing in a radial direction and that directly feeds the lubricating oil into a gap between the bearing pads, the gap extending in the circumferential direction, and
the oil feeding nozzle is spaced apart from one of the inner and outer rings, and is coupled to the other one of the inner and outer rings.

6. The tilting pad bearing according to any one of claims 1 to 5, further comprising end plates that are located on both sides of the bearing housing in an axial direction, respectively, the end plates including sealing surfaces that face open ends of the slits in the axial direction, with gaps present between the sealing surfaces and the open ends of the slits, wherein
the end plates are spaced apart from one of the inner and outer rings, and coupled to the other one of the inner and outer rings.
